# EUROPEAN PATENT APPLICATION

(11) **EP 1 722 535 A2**
(43) Date of publication of application: **15.11.2006**
(21) Application number: 06113637.0
(22) Date of filing: 08.05.2006
(51) Int. Cl.: H04L 29/06

(54) **Method and apparatus for identifying and disabling worms in communication networks**

(30) Priority: 10.05.2005 US 125446
(71) Applicant: AT&T Corp., New York, NY 10013-2412 (US)
(72) Inventor: Chen, David, c/o AT&T Corp., New York, NY 10013-2412 (US); Amoroso, Edward, c/o AT&T Corp., New York, NY 10013-2412 (US)
(74) Representative: Asquith, Julian Peter

(57) **Abstract**

A method and apparatus for enabling a network security service and network security infrastructure to detect, identify, mitigate, neutralize, and disable worms through distributed worm probes that can be linked to centralized monitoring systems for emergency response process is disclosed. The worm probes track packets with destination unreachable errors on a per source IP address basis. In one embodiment, when the number of such errors exceeds a predefined local threshold, e.g., within a predefined local time period at a worm probe, the count of such errors as well as the source IP address will be sent to all other worm probes in the network as an alert. When the number of such errors exceeds a predefined global threshold, e.g., within a predefined global time period, traffic from the endpoint device with the identified source IP address will be blocked to prevent that endpoint device from spreading worms further.

## Description

The present invention relates generally to communication networks and, more particularly, to a method and apparatus for identifying and disabling worms, e.g., TCP/IP worms, in packet networks, e.g. Internet Protocol (IP) networks.

### BACKGROUND OF THE INVENTION

Small companies and home PC users believe that their systems are not intended targets to a serious hacker because a serious hacker would be more interested in more critical infrastructure and systems. It is true that even after spending considerable effort, a skilled hacker may not be able to break into these non-critical systems. However, skilled hackers are not the major threat, and the biggest threat comes from internet worms e.g., TCP/IP worms, which are in worm infected systems connected to networks, constantly and automatically attempting to penetrate computer systems to infect these systems and to turn them into same attacking machines. A TCP/IP worm is software which is developed by skilled hackers. After hackers manually infect a TCP/IP worm into an infect-able system on the internet, this TCP/IP worm infected system start to send out billions of TCP/IP worm IP packets to try to penetrate millions of computer systems on the internet. An infect-able system receives such TCP/IP worm IP packets will be infected automatically. In turn, it starts to send out billions of same TCP/IP worm IP packets to try to penetrate other systems. As a domino effect, the more infect-able systems receive TCP/IP worm IP packets, the more TCP/IP worm infected systems and the more TCP/IP worm IP packets to be send out. This type of penetration attack is performed automatically and takes virtually no human hacking effort to attack millions of potential victims. Anyone with a firewall on the Internet feels the steady background IP packets from these TCP/IP worm attacks. If a system connects to the Internet, chances are that every few minutes, a TCP/IP worm, somewhere on the Internet, may attempt to penetrate this system. The TCP/IP worm trying to penetrate this system may not be launched by a skilled hacker and may not spend a significant of time and effort. If the worm succeeds in breaking into this system, it is accomplished automatically by chance.

With all kinds of new TCP/IP worms that are being created to attack thousands of different vulnerabilities against millions of systems on the Internet, the chance that some of the worms will succeed in finding a combination of vulnerabilities which can penetrate millions of computer systems and turns them into TCP/IP worm attacking machines within hours is quite high. It has been observed that significant damages can be inflicted, e.g., through denial of services caused by a huge volume of network traffic that is generated by millions of TCP/IP worm infected computer systems sending out attacking worm IP packets. If a TCP/IP worm infected system is connected to a company internal network via wired Local Area Network (LAN), wireless LAN, Virtual Private Network (VPN), dial up network, or any other methods, it will attack the corporate internal network in the same way, thereby causing significant harm to the company's internal network.

All IP network service providers are facing this serious problem. This includes all top tier internet service providers, large corporations, network outsourcing service providers, as well as many small companies. TCP/IP worms are serious problems that need to be addressed immediately.

Therefore, a need exists for a method and apparatus for identifying and disabling worms, e.g., TCP/IP worms, in any IP network.

### SUMMARY OF THE INVENTION

In one embodiment, the present invention enables a network security service and network security infrastructure to detect, identify, mitigate, neutralize, and disable worms, e.g., TCP/IP worms, through distributed worm probes that can be linked to centralized monitoring systems for emergency response process. The worm probes track packets with destination unreachable errors on a per possible worm originating source IP address count basis to multiple destination IP addresses, and track all IP packets on a per possible worm originating source IP address count basis to multiple destination IANA (Internet Assigned Numbers Authority) reserved IP addresses. When the number of such counts of possible worm originating source IP address exceeds a predefined local threshold within local predefined time period at a worm probe, the counts of such errors as well as the possible worm originating source IP address will be sent to all other worm probes in the network as an alert. When the number of such counts of possible worm originating source IP address exceeds a predefined global threshold within predefined global time period, traffic from the endpoint device with the identified worm originating source IP address will be blocked to prevent that endpoint device from spreading worms further.

### BRIEF DESCRIPTION OF THE DRAWINGS

The teaching of the present invention can be readily understood by considering the following detailed description in conjunction with the accompanying drawings, in which:

FIG. 1 illustrates an exemplary global corporate IP network related to the present invention;

FIG. 2 illustrates a flowchart of the main method for identifying and disabling TCP/IP worm infected systems in an IP network of the present invention;

FIG. 3 illustrates a flowchart of sub-method "Possible worm IP address table periodical clearing" for identifying and disabling TCP/IP worm infected systems of the present invention;

FIG. 4 illustrates a flowchart of sub-method "Add possible worm" for identifying and disabling TCP/IP worm infected systems of the present invention;

FIG. 5 illustrates a flowchart of sub-method "Receive Global Change" for identifying and disabling TCP/IP worm infected systems of the present invention;

FIG. 6 illustrates the Internet Control Message Protocol type 3 packet format related to the present invention;

FIG. 7 illustrates a high level components diagram of a general purpose computer suitable for use in performing the functions described herein;

FIG. 8 illustrates an exemplary data structure of the Local Table of the present invention; and

FIG. 9 illustrates an exemplary data structure of the Global Table of the present invention.

To facilitate understanding, identical reference numerals have been used, where possible, to designate identical elements that are common to the figures.

### DETAILED DESCRIPTION

Worms, e.g., Transport Control Protocol/Internet Protocol (TCP/IP) worms not only damage vulnerable computer systems on the internet, but they also generate a large volume of network traffic which causes network Denial of Service (DOS) attack.

A worm, e.g., a TCP/IP worm, is a self-replicating computer program, similar to a computer virus. A virus attaches itself to, and becomes part of, another executable program; however, a worm is self-contained and does not need to be part of another program to propagate itself. They are often designed to exploit the data transmission capabilities such as the TCP/IP protocol found on many computers. Major TCP/IP worm attacks include infamous Code Red, Slapper, and SQL/Slammer, that causes serious impacts on global networks in recent years. The United States Government announced "The National Strategy to Secure Cyberspace" initiative and described TCP/IP worms as the cause of billions of dollars in damage that served as a wake-up call for a nation that had become dependent on computer networks.

In all companies and many home networks, there are computers connected to either the internet or company intranet. So far, there is no effective way to detect new TCP/IP worms until they attack thousands of computers and turn these computers into TCP/IP worm attacking machines. Namely, the network security industry, including internet and computer security companies, have failed to provide effective methods or products quickly enough to identify and mitigate new TCP/IP worms which have unknown signatures and strike and take down major internet hub nodes.

An Intel Pentium III 500 MHz PC with a gigabit Ethernet Network Interface Card (NIC) infected with a worm, e.g., the SQL/Slammer worm, can produce over 100,000 packet/second or 300 megabit/second (Mbps) of traffic. The infected computer randomly chooses target IP addresses to attempt to break into computers associated with these IP addresses. This means that a single machine with the right Internet connection can attack the entire Internet in 12 hours. If one computer system with a 10/100 Mbps NIC card can be penetrated and turned into a TCP/IP worm infected machine, it will immediately consume all the bandwidth of the10/100 Mbps network and the outgoing direction bandwidth of a Wide Area Network (WAN) connection using T1 (1.5 Mbps) or T3 (45 Mbps) interface connections. With a couple of high end systems in a data center infected with a TCP/IP worm, they can easily consume all the bandwidth in the outgoing direction of an OC3 (155 mbps) or even an OC12 (622 mbps) WAN interface connections. In the incoming direction of those congested WAN interface, almost 100% of the IP packets will fail to reach the network on which the infected computer system resides. Unless the infected computer system is physically shutdown or disconnected from network, the only remote IP traffic control to mitigate this problem is to apply a filter to the routers or switches connected to the WAN connection. Even today, new DOS attacks caused by TCP/IP worms which create congestions at WAN connections are almost unavoidable because there are too many new variants of TCP/IP worms being created to constantly and automatically attack thousands of different vulnerabilities against millions of computer systems on the TCP/IP network.

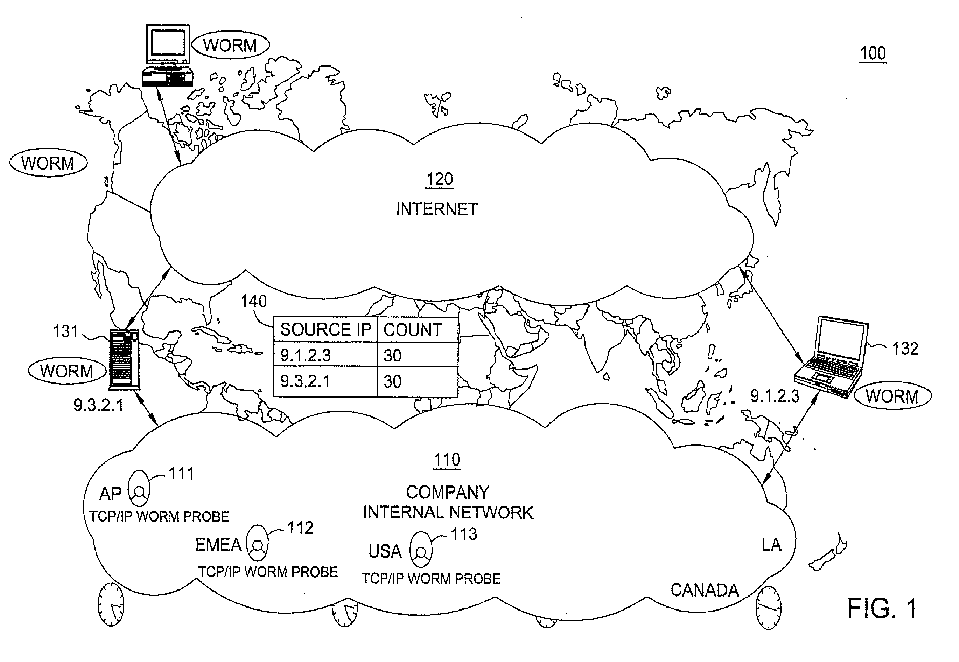

FIG. 1 illustrates an exemplary global IP network related to the present invention. Namely, FIG. 1 illustrates an example network, e.g., a packet network such as an IP (Internet Protocol) network related to the present invention. Exemplary packet networks include internet protocol (IP) networks, asynchronous transfer mode (ATM) networks, frame-relay networks, and the like. An IP network is broadly defined as a network that uses Internet Protocol to exchange data packets.

To illustrate, in FIG. 1, global corporate IP network 110 is connected to the Internet 120 via router 131 and router 132. Global corporate IP network may include locations in Asia Pacific, Europe, United States, Canada, and Latin America. Worm probes 111, 112, and 113 are deployed at key locations in various countries to detect worm, e.g., TCP/IP worm, related activities. Table 140 shows exemplary suspicious global worm activity counts and their associated possible worm originating source IP address. When the suspicious worm activity counts exceed a predefined global threshold within a predefined time period, the router or switch closest to the source IP address originating the suspicious worm activities will be informed to block all traffic from the machine with that particular worm originating source IP address, thereby preventing the TCP/IP worms from spreading and blocking worm IP packets which have huge volume to cause the network traffic jam.

The theory behind the present invention is that TCP/IP worm infected system sends out worm packets to randomly generated destination IP addresses which include IANA reserved IP addresses and many IP addresses without a live system. For example, the whole IP version 4 (IPv4) has an address space of 4,294,967,296 IP addresses. This includes private IP addresses, broadcasting IP addresses, multicasting IP addresses, loopback IP addresses and Internet Assigned Numbers Authority (IANA) reserved IP addresses. Also, for those IP addresses with live systems, not every IP address has protocols or ports in service on which a worm is penetrating. For example, a Simple Mail Transfer Protocol (SMTP) server may not have the TCP port number 80 open. Also, even if the live system using an IP address has a particular port open, it may not have a vulnerability on which a worm can penetrate. For example, a known worm called "Code Red Worm" can only penetrate Microsoft Internet Information Server (IIS) web server with "dot dot backslash" type vulnerabilities. Therefore, before a worm infected system penetrates another computer system, it should have already sent many worm packets to IANA reserved IP addresses, to many IP addresses without live systems, to systems which do not have certain protocols and ports in service and left behind trails of IP traffic associated with the worm attack in the IP network because by default the IP network devices replies to the worm system with an ICMP unreachable packet, such as ICMP type 3 packets that have code 0, 1, 2 or 3, to inform worm system if an IP address is not routable, or it does not have a live system, or the system does not have certain protocols and ports in service.

If a special worm probe device uses the trails of these ICMP unreachable packets, it can immediately identify the system that receives these ICMP unreachable packets coming from multiple systems is infected with a TCP/IP worm or is performing IP address scans in the IP network. If such a system is not a known authorized IP address scan system, the special worm probe device can automatically communicate with firewalls, routers, switches and hubs in the IP network to block traffic originated from the worm infected computer system or command the worm infected computer system to be shutdown. In this manner, the worm can be neutralized and disabled automatically within seconds even if this worm is a new variant unknown features, such as what port it is attempting to penetrate, what protocol it is attempting to penetrate, what Operating System (OS) it is attempting to penetrate, what application it is attempting to penetrate, what vulnerability it is attempting to penetrate, or what worm signature it possesses etc. As long as the suspected system is sending worm packets to IANA reserved IP addresses, to IP addresses without live systems, to systems without certain protocols and ports in service, it will leave behind trails of ICMP unreachable traffic coming from multiple systems.

The mathematical statistics behind the present invention is to use L, M, N, X and Y as follows:
- L is the total number of IP addresses available in a network cloud;
- M is the total number of IP addresses with live systems in a network cloud;
- N is total number of IP addresses of which a worm can penetrate within a network cloud;
- X is the average number of IP addresses within this network cloud attacked by a worm before a computer system is penetrated; and
- Y is the average number of IP unreachable addresses attacked by the worm that leaves behind the attack trails within this network cloud before a computer system is penetrated.

In one embodiment, X = (L/N) - 1 and Y = ( L - M ) / N. For example, in a class A subnet with prefix 9.x.x.x, 100,000 IP addresses are used by computer systems, and half of them use Windows OS and half of them use Unix or other OS. Also, out of the 100,000 computer systems, 50,000 IP addresses of computer systems use Windows OS; furthermore, half of these 50,000 systems, 25,000, have vulnerability which allows a worm to penetrate and infect these systems. In addition, 100,000 more IP addresses are used by network devices, such as routers, switches, hubs and etc. A class A IP subnetwork has a total of 16,777,216 valid IP addresses. Within this example, there are a total of 200,000 IP addresses with live systems, and 100,000 of them for computer systems and 100,000 of them for networking devices. Also, out of the 50,000 Windows OS machines, there are 25,000 IP addresses of Windows OS systems which could be penetrated and infected with worms. Now, assume someone releases a new worm in the internet. This worm may randomly penetrate a multi-home computer system A which has one interface to subnet 9.x.x.x. Based on statistics, before system A can penetrate another system, say B, in subnet 9.x.x.x, system A will attack on average 670 IP addresses within subnet 9.x.x.x, e.g. X = (16777216 / 25000) - 1 = 670. System A also creates 663 trails of unreachable IP address attack traffic on average, e.g. Y = (16777216 - 200000) / 25000 = 663. If some worm probe devices of the present invention are placed within subnet 9.x.x.x, they will be able to detect some of these trails of worm attacks to unreachable IP address and identify system A as an infected system before it can penetrate another system B based on the average number of attempts originated by system A. Within seconds, these worm probe devices can automatically communicate to firewalls, routers, switches and hubs to block traffic originated from system A or command system A to be shutdown. Since 663 is only the average number of attempts before another system is infected based on statistics, system A may actually penetrate system B before it can be identified as an infected system. In that case, as soon as system A is identified, all traffic originated from it will be blocked. Furthermore, if system B is infected, it will be identified and its traffic blocked using the same method by these worm probe devices. Based on the described mathematics, one can see that in order to obtain a large number of Y so that the trails left behind by the attacks to unreachable IP address created by a worm infected system can be detected quickly before the worm penetrate another system, the ratio of available IP addresses vs. IP addresses with live system should be large enough. The higher the ratio, the less likely to let worm system A to penetrate infect-able system B. The lowest ratio which disables worm system A before it penetrates worm infect-able system B is about 20:1 for Code Red worm in 10 Mbps network with one tenth of systems are infect-able systems. When the ratio becomes very low, such as 2:1, the worm probe devices are still able to identify and disable worm system A. The difference between a high ratio and a low ratio is that in a high ratio scenario, worm infect-able system B may not be penetrated while in a low ratio scenario, worm infect-able system B may be penetrated and becomes another worm infected system attacking other infect-able systems.

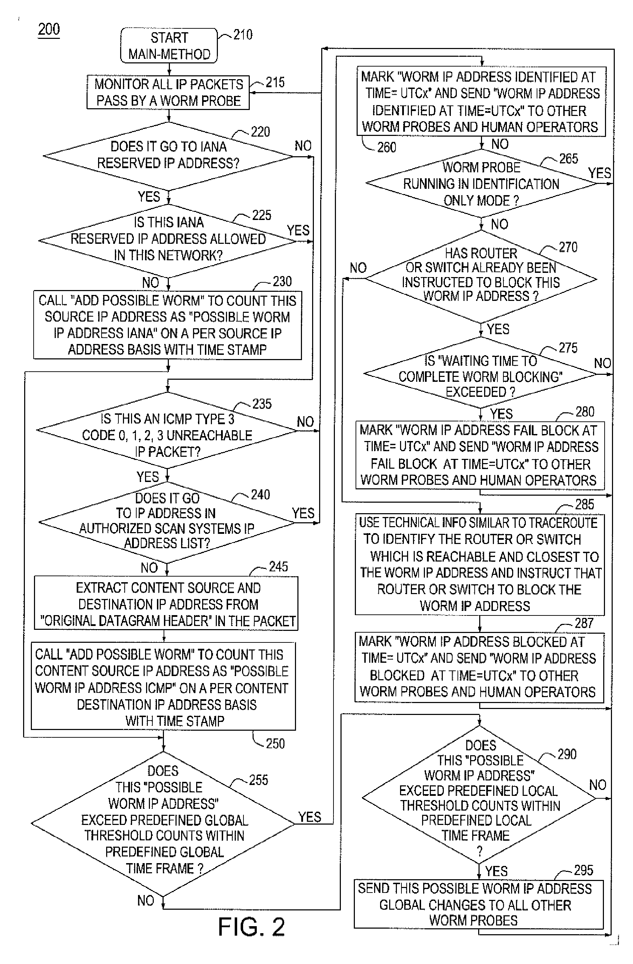

FIG. 2 illustrates a flowchart of a main method for identifying and disabling TCP/IP worm infected systems of the present invention. Method 200 starts in step 210 and proceeds to step 215. Note that worm probe devices are deployed strategically in heavy traffic IP nodes. Key locations include, but are not limited to, most of LAN IP subnet and main traffic aggregation hubs or exchange points with heavy IP traffic load in the network, such as border router, firewall, proxy, VPN concentrator, Intrusion Detection System (IDS) and Intrusion Prevention System (IPS) segments. An IDS is a system that alerts the user to the presence of an intrusion on the network through network traffic analysis techniques. An IPS is a system that exercises access control to protect computers from exploitation from unauthorized users.

In step 215, method 200 uses the worm probe devices to listen to all IP packets, e.g., TCP, UDP, ICMP and other protocols IP packets that pass by a worm probe NIC card on the network. In step 220, method 200 checks if the destination IP address of an IP packet is in the Internet Assigned Numbers Authority (IANA) reserved IP address space. Note that TCP/IP worms attack potential target machines using randomly generated IP addresses. Since the IANA reserved IP address space is not used normally; therefore, a packet destined to such an address requires investigative analysis. If the destination IP address of an IP packet is in the IANA reserved IP address space, method 200 proceeds to step 225; otherwise, the method proceeds to step 235.

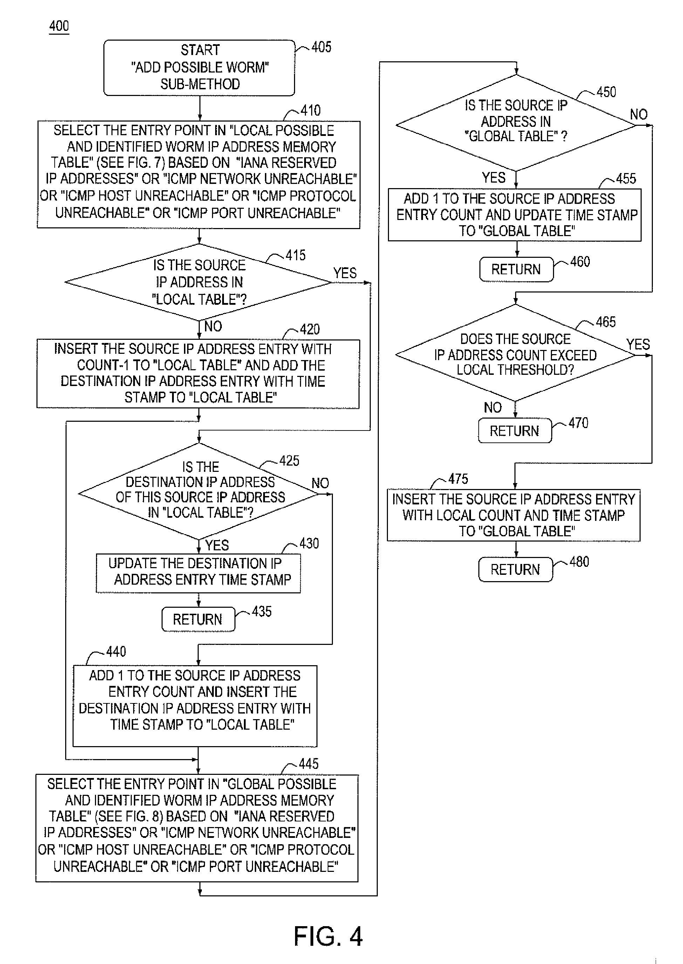

In step 225, method 200 checks if the destination IP address of the IP packet in the IANA reserved IP address space is an allowed IANA IP address stored in the allowed reserved IANA IP address memory table. If the destination IP address of an IP packet is in the allowed IANA reserved IP address space, method 200 proceeds to step 235; otherwise, the method proceeds to step 230. In step 230, method 200 executes sub-method 400 "Add Possible Worm" shown in FIG. 4 to increment by one the cumulative count of this source IP address entry as an IANA reserved space violation with the current timestamp. Then, the method proceeds to step 255. Reserved IANA IP addresses are illustratively shown in TABLE 1 below. The most up-to-date IANA reserved IP address space can be found at
http://www.iana.org/assignments/ipv4-address-space.

**TABLE 1**

| **IANA reserved IP addresses (Valid on 03/18/2005, IANA may change it later.)** |
|---|
| 0.0.0.0 - 2.255.255.255 |
| 5.0.0.0 - 5.255.255.255 |
| 7.0.0.0 - 7.255.255.255 |
| 23.0.0.0 - 23.255.255.255 |
| 27.0.0.0 - 27.255.255.255 |
| 31.0.0.0 - 31.255.255.255 |
| 36.0.0.0 - 37.255.255.255 |
| 39.0.0.0 - 39.255.255.255 |
| 41.0.0.0 - 42.255.255.255 |
| 49.0.0.0 - 50.255.255.255 |
| 73.0.0.0 - 79.255.255.255 |
| 89.0.0.0 - 123.255.255.255 |
| 127.0.0.0 - 127.255.255.255 |
| 173.0.0.0 - 187.255.255.255 |
| 189.0.0.0 - 190.255.255.255 |
| 197.0.0.0 - 197.255.255.255 |
| 223.0.0.0 - 223.255.255.255 |
| 240.0.0.0 - 255.255.255.255 |

In step 235, method 200 checks if the packet is an ICMP type 3 packet with code 0 (network unreachable), code 1 (host unreachable), code 2 (protocol unreachable) or code 3 (port unreachable). An ICMP type 3 packet format is shown in FIG. 6. If the packet is an ICMP type 3 with code 0, 1, 2 or 3 packet, the method proceeds to step 240; otherwise, proceeds back to step 215. In step 240, method 200 checks if the destination IP address of the packet is in the authorized scan system IP address memory table. If the destination IP address of the packet is in the authorized scan system IP address memory table, the method proceeds back to step 215; otherwise, the method proceeds to step 245.

In step 245, method 200 extracts from the header of the original IP packet embedded in the ICMP type 3 packet to obtain the source IP address, the destination IP address, the protocol information, and the port information. Method 200 counts the original IP packet as an ICMP type 3 IP address violation. An ICMP type 3 with code 0, 1, 2 and 3 packet format is shown in FIG. 6. The method then proceeds to step 250. Note that from this step onward, method 200 uses the content source IP address and the content destination IP address extracted from the header of the original IP packet which is part of the content of ICMP unreachable packets. The reason is that ICMP unreachable packets were the reply packets due to unreachable destination network, host, protocol, or port. A worm infected system may originate packets to multiple destinations while the reply ICMP unreachable packets will indicate that these unreachable packets originate from a single source IP address to a single destination. In order to solve this problem, original source IP address and destination IP address are extracted from the original IP packet, which is part of the content of an ICMP packet, in order to determine whether those original IP packets are sent to multiple destination IP addresses from a single source IP address. For example, the worm infected computer 9.200.200.5 sends worm packets to IP addresses 9.100.100.111 and 9.100.100.222. If both IP addresses do not have live systems, the end router 9.100.100.1 sends two host unreachable packets back to the worm infected computer. Both of these two host unreachable packets are replied by router 9.100.100.1 to the worm infected computer 9.200.200.5. Only the contents of these two ICMP packets are different. One contains original header to destination 9.100.100.111 while the other contains original header to destination 9.100.100.222.

In step 250, method 200 executes the sub-method 400 "Add Possible Worm" shown in FIG. 4 to increment by one the cumulative count of all source IP addresses associated with IP packets that produce ICMP error code, e.g., unreachable destination IP address (e.g., network and/or host), unreachable protocol, and unreachable port. In step 255, method 200 checks if one of the worm probe devices has a source IP address associated with IP packets that produce a cumulative count that exceeds the predefined global threshold within a predefined global time period. The predefined global threshold is a configurable parameter specified by the worm probe operator. In one embodiment, the default global threshold of the cumulative count is 10 times the number of worm probes and the default predefined global time period is 2 seconds. If any of the worm probe devices has a source IP address associated with IP packets that produce ICMP type 3 IP address violation or IANA reserved IP address violation cumulative count that exceeds the predefined global threshold within the predefined global time period, the method proceeds to step 260; otherwise, the method proceeds to step 290.

In step 260, method 200 marks the source IP address in the Global Table with worm IP address x with a current timestamp UTCx and sends the Worm IP address x and its associated timestamp UTCx to other worm probes, and informs human operators using multiple means including, but are not limited to, emails and pagers etc. The method then proceeds to step 265. In step 265, method 200 checks if the worm probe is running in worm infected system identification only mode or in worm infected system identification and disabling mode. If the worm probe is in the worm infected system identification only mode, the method proceeds back to step 215; otherwise, the method proceeds to step 270 to disable worm infected system. If a worm probe is running in worm infected system identification only mode, the worm probe will only identify worm infected systems but will not disable them. If a worm probe is running in worm infected system identification and disabling mode, the worm probe will identify worm infected systems and then disable them. The Global Table is a table that keeps track of a list of possible source IP addresses and associated data, such as cumulative count and timestamp, which have been identified globally as possible worm infected systems.

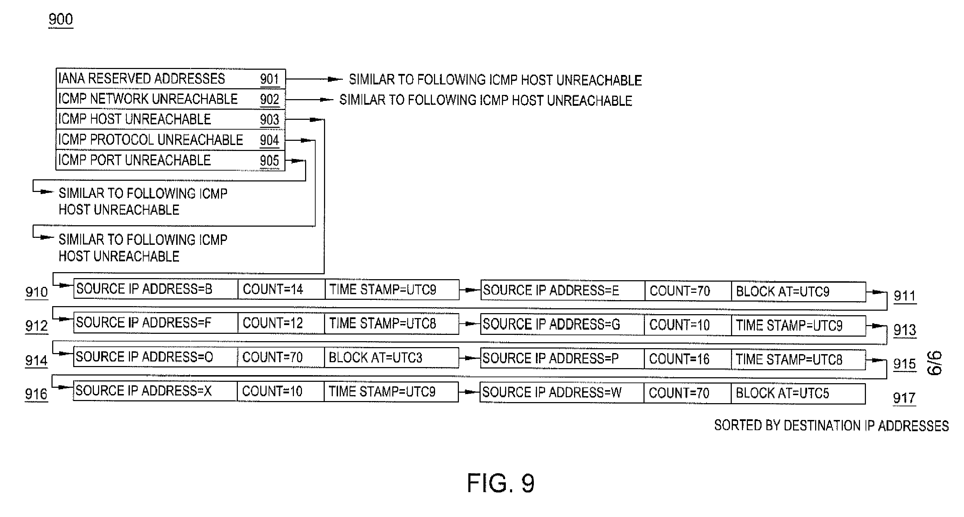

The data structure of the Global Table is shown in FIG. 9. Data Structure 900 comprises 5 entry points for this table. Entry point 901 is for IANA reserved IP address violation, entry 902 point is for ICMP network unreachable violation, entry 903 point is for ICMP host unreachable violation, entry 904 point is for ICMP protocol unreachable violation, or entry 905 point is for ICMP port unreachable violation. For each entry point, a set of similar underlying data structures are associated with it. For instance, entry point 903 has a set of 8 data structures comprising data structures 901 through 917. Each data structure, 901 to 917, comprises a source IP address entry, a cumulative count entry, and a timestamp entry. These data structures are sorted and ordered by the source IP address entry.

In step 270, method 200 checks if the worm probe has already instructed routers or switches to block this identified worm infected system. If it has not issued blocking instructions, the method proceeds to step 285; otherwise, the method proceeds to step 275. In step 275, method 200 checks if the blocking request exceeds a predefined time threshold to complete the blocking task. If the predefined time threshold to complete the blocking task is exceeded, the method proceeds to step 280; otherwise, the method proceeds back to step 215. In step 280, method 200 marks the source IP address in the Global Table with worm IP address x fails to block with a current timestamp UTCx, sends the worm IP address x and the failure to block timestamp UTCx to other worm probes, and informs human operators using multiple means including, but are not limited to, emails and pagers etc. Although the worm is not blocked, the system has detected the worm and will report to the operators who can investigate and unplug the worm infected system manually. Then, the method proceeds back to step 215.

In step 285, method 200 uses a technique similar to the traceroute command to identify the router or switch that is still reachable and the closest to the identified source IP address computer system. The method then instructs the identified router or switch to block all traffic from the identified source IP address. Then, method 200 proceeds to step 287. In step 287, method 200 marks the source IP address in the Global Table with worm IP address x successfully blocked with a current timestamp UTCx, sends the worm IP address x and the success to block timestamp UTCx to other worm probes, and informs human operators using multiple means including, but are not limited to, emails and pagers etc. Then, the method proceeds back to step 215.

In step 290, method 200 checks if one of the worm probes has a source IP address associated with IP packets that produce a cumulative count that exceeds the predefined local threshold within a predefined local time period. The predefined local threshold is a configurable parameter specified by the worm probe operator. In one embodiment, the default local threshold is 10 and the default local time period is 1 second. If any of the worm probes has a source IP address associated with IP packets that produce ICMP type 3 IP address violation or IANA reserved IP address violation cumulative count that exceeds the predefined local threshold within predefined local time period, the method proceeds to step 295; otherwise, the method proceeds back to step 215.

In step 295, method 200 sends this possible worm IP address that exceeds the local threshold within the predefined local time period from the worm probe device that detects the threshold crossing to all other worm probes in the network. The method then proceeds back to step 215.

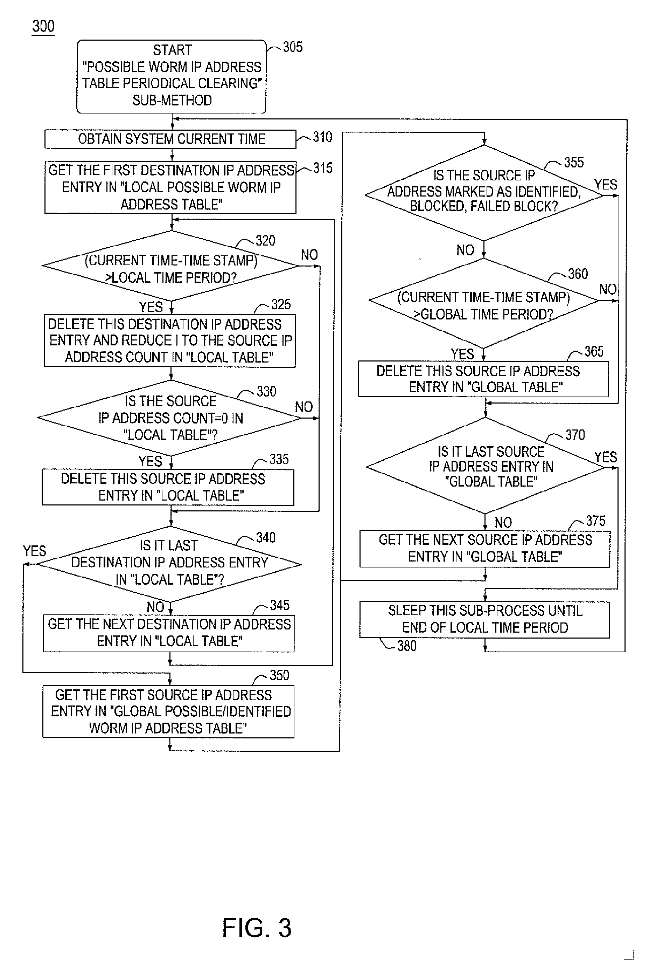

FIG. 3 illustrates a flowchart of sub-method "Possible worm IP address table periodical clearing" for identifying and disabling TCP/IP worm infected systems of the present invention. This is a very important sub-process because without this clearing sub-process to delete those outdated source IP address entries, method 200 will lead to false positive identification of worm infected systems because not all IANA reserved IP address violations and ICMP unreachable violations are caused by TCP/IP worms. Only those IANA violation packets and ICMP unreachable packets which have the pattern of one source IP address with multiple destination IP addresses within a short time period are originated by TCP/IP worms or scan machines. After the worm probe main method, method 200, starts to run, the "Local possible worm IP address table", referred to as the Local Table hereafter, and the "Global possible worm IP address table", referred to as the Global Table hereafter, contains IP addresses which are associated with IANA reserve IP address violations and ICMP unreachable violations. The Global Table is a table that keeps track of a list of possible source IP addresses and associated data, such as cumulative count and timestamp, which have been identified globally as possible worm infected systems. The Local Table is a table that keeps track of a list of possible source IP addresses and associated data, such as cumulative count and timestamp, which have been identified locally as possible worm infected systems. Method 300 is used to clear up those exceeded time period IP address entries from memory tables. Method 300 starts in step 305 and proceeds to step 310.

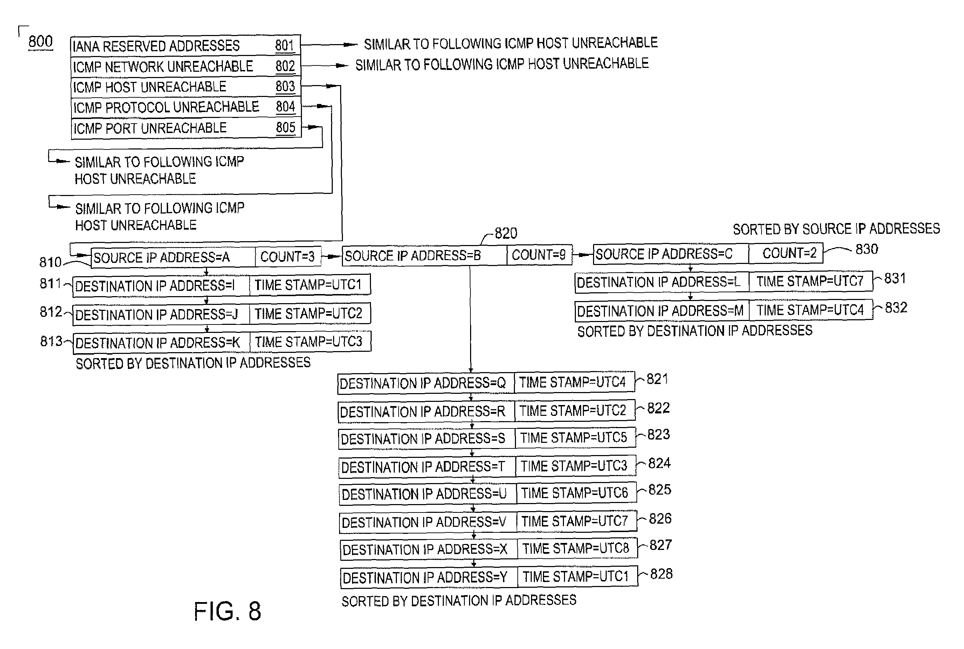

The data structure of the Local Table is shown in FIG. 8. Data Structure 800 comprises 5 entry points for this table. Entry point 801 is for IANA reserved IP address violation, entry 802 point is for ICMP network unreachable violation, entry 803 point is for ICMP host unreachable violation, entry 804 point is for ICMP protocol unreachable violation, or entry 805 point is for ICMP port unreachable violation. For each entry point, a set of similar underlying data structures are associated with it. For instance, entry point 803 has a set of 3 source IP address data structures 810, 820, and 830. Each of these source IP address data structures, 810, 820, and 830, comprises a source IP address entry and a cumulative count entry. In addition, each of the source IP address data structure has a set of one or more underlying destination IP address data structures associated with it. For instance, for the source IP address data structure 810 with source IP address A, it has a set of 3 underlying destination IP address data structures, 811, 812, and 813, associated with it. Each of the destination IP address data structures comprises a destination IP address entry and a timestamp entry. Similarly, the source IP address data structure 820 with source IP address B, it has a set of 8 underlying destination IP address data structures, 821 through 828, associated with it and the source IP address data structure 830 with source IP address C, it has a set of 2 underlying destination IP address data structures, 831 and 832, associated with it. The source IP address data structures are sorted and ordered by the source IP address and the underlying destination IP address data structures are sorted and ordered by the destination IP address.

The data structure of the Global Table is shown in FIG. 9. Data Structure 900 comprises 5 entry points for this table. Entry point 901 is for IANA reserved IP address violation, entry 902 point is for ICMP network unreachable violation, entry 903 point is for ICMP host unreachable violation, entry 904 point is for ICMP protocol unreachable violation, or entry 905 point is for ICMP port unreachable violation. For each entry point, a set of similar underlying data structures are associated with it. For instance, entry point 903 has a set of 8 data structures comprising data structures 901 through 917. Each data structure, 901 to 917, comprises a source IP address entry, a cumulative count entry, and a timestamp entry. These data structures are sorted and ordered by the source IP address entry.

In step 310, method 300 accesses the computer system time which is synchronized to the Universal Time Clock using the Network Timing Protocol protocol. The Network Time Protocol is a protocol used to synchronize time between computers on the Internet. In step 315, method 300 accesses the first destination IP address entry in Local Table. In step 320, method 300 checks if the value of (current time - timestamp associated with the destination IP address in the Local Table) exceeds the predefined local time period of this destination IP address. If the value exceeds the predefined local time period, the method proceeds to 325; otherwise, the method proceeds to step 340. In step 325, method 300 deletes this destination IP address entry and frees the memory allocation to the memory pool. The source IP address cumulative count in the Local Table, which is associated with this destination IP address, is decremented by 1. In step 330, method 300 checks if the source IP address cumulative count is 0 in the Local Table. If the source IP address cumulative count is 0, the method proceeds to step 335; otherwise, the method proceeds to step 340.

In step 335, method 300 deletes this source IP address entry and frees the memory allocation to memory pool. This means that during the predefined local time period, this source IP address did not send IP packets to a lot of multiple destination IP addresses which are in the IANA reserved IP address space or which are unreachable. In step 340, method 300 checks if this source IP address is the last destination IP address entry in the Local Table. If the source IP address is the last destination IP address entry in the Local Table, method 300 has finished processing "Local Table" clearing and proceeds to step 350 to process "Global Table" clearing; otherwise, method 300 proceeds to step 345. In step 345, method 300 accesses the next destination IP address entry in the Local Table and proceeds back to step 320.

In step 350, method 300 accesses the first source IP address entry in the Global Table. In step 355, method 300 checks if this source IP address in the Global Table is a worm that has been identified, has been successfully blocked or has failed to be blocked. If this source IP address in the Global Table is a worm that has been identified, has been successfully blocked or has failed to be blocked, method 300 proceeds to step 370; otherwise, method 300 proceeds to step 360. In step 360, method 300 checks if the value of (current time - timestamp associated with the source IP address in the Global Table) exceeds the predefined global time period of this source IP address. If the value exceeds the predefined global time period, the method proceeds to 365; otherwise, the method proceeds to step 370. In step 365, method 300 deletes this source IP address entry and frees the memory allocation to the memory pool.

In step 370, method 300 checks if it is the last source IP address entry in the Global Table. If it is, method 300 proceeds to step 380; otherwise, the method proceeds to step 375. In step 375, method 300 accesses the next source IP address entry in the Global Table and proceeds back to step 355. In step 380, method 300 waits until the end of the predefined local time period. At that time, method 300 proceeds back to step 310.

FIG. 4 illustrates a flowchart of sub-method "Add possible worm" for identifying and disabling TCP/IP worm infected systems of the present invention. Method 400 is executed and called by method 200 to add possible worm IP address to the Local Table and the Global Table. Method 400 starts in step 405 and proceeds to step 410.

In step 410, method 400 selects the entry point in the Local Table based on IANA reserved IP address violation, ICMP network unreachable violation, ICMP host unreachable violation, ICMP protocol unreachable violation, or ICMP port unreachable violation. In step 415, method 400 checks the source IP address whether it is already in the Local Table by searching the sorted IP address entries in the Local Table. If the source IP address is found, method 400 proceeds to step 425; otherwise, the method proceeds to 420. In step 420, method 400 allocates a memory structure from the system memory pool for the source IP address, fills in the source IP address and sets the source IP address cumulative count to 1. Method 400 also allocates a memory structure from the system memory pool for the destination IP address, fills in the destination IP address with the current timestamp. Note that for each source IP address data structure, there will be one or more destination IP address data structures that are associated with each source IP address data structure.
Thus, in one embodiment, the source IP address has a count of the destination IP addresses, and the destination IP addresses have the current time timestamp. Method 400 then inserts these memory structures into the Local Table and keeps the source IP address sorted.

In step 425, method 400 checks if the destination IP address is already in the Local Table associated with a source IP address by searching the sorted IP address entries in the Local Table. If the destination IP address is found in the Local Table, method 400 proceeds to step 430; otherwise, the method proceeds to 440. In step 430, method 400 updates the destination IP address entry with the current timestamp. Then the method proceeds to step 435 to return to method 200. In step 440, method 400 increments by one the source IP address cumulative count. Method 400 also allocates a memory structure from the system memory pool for the destination IP address, fills in the destination IP address with the current timestamp. Then, method 400 inserts the destination IP address memory structure into the corresponding source IP address entry in the Local Table and keeps the destination IP addresses sorted.

In step 445, method 400 selects the entry point in the Global Table based on IANA reserved IP address violation, ICMP network unreachable violation, ICMP host unreachable violation, ICMP protocol unreachable violation, or ICMP port unreachable violation. In step 450, method 400 checks if the source IP address is already in the Global Table by searching the sorted IP address entries in the Global Table. If the source IP address is found, method 400 proceeds to step 455; otherwise, the method proceeds to 465. In step 455, method 400 increments by one the source IP address cumulative count and updates the timestamp to this source IP address entry in the Global Table. Then the method proceeds to step 460 to return to method 200.

In step 465, method 400 checks if the local source IP address cumulative count exceeds the predefined local threshold. If the local source IP address cumulative count exceeds the predefined local threshold, the method proceeds to 475; otherwise, the method proceeds to step 470 to return to method 200. In step 475, method 400 allocates a memory structure from the system memory pool for the source IP address, copies the source IP address and the source IP address cumulative count into the memory structure, sets the timestamp with the current time. Then, method 400 inserts this memory structure into the Global Table and keep the source IP address sorted. Then, the method proceeds to step 480 to return to method 200.

FIG. 5 illustrates a flowchart of sub-method "Receive Global Change" for identifying and disabling TCP/IP worm infected systems of the present invention. Method 500 is the sub-method that receives and updates changes sent from other worm probes. Method 500 starts in step 505 and proceeds to step 510.

In step 510, method 500 listens and waits until it receives global change information from other worm probes. In step 515, method 500 checks if the received global change information is a "Global setting change" or a "Global possible worm IP address change" sent by other worm probes. If it is the "Global setting change", the method proceeds to step 520; otherwise, the method proceeds to step 525.

In step 520, method 500 copies those "Global settings change" information into the worm probe settings memory tables. Then, the method proceeds back to step 510. In step 525, method 500 selects the entry point in the Global Table based on IANA reserved IP address violation, ICMP network unreachable violation, ICMP host unreachable violation, ICMP protocol unreachable violation, or ICMP port unreachable violation.

In step 530, method 500 checks if the received IP address is already in the Global Table. If the received IP address is already in the Global Table, the method proceeds to step 550; otherwise, the method proceeds to step 535. In step 535, method 500 allocates a memory structure from the system memory pool for the source IP address, copies the source IP address and the source IP address cumulative count into the memory structure, and sets the timestamp to the current time. Then, method 500 inserts this memory structure into the Global Table and keeps the source IP address sorted.

In step 540, method 500 selects the entry point in the Local Table based on IANA reserved IP address violation, ICMP network unreachable violation, ICMP host unreachable violation, ICMP protocol unreachable violation, or ICMP port unreachable violation. In step 545, method 500 checks if the received IP address is also in the Local Table. If the received IP address is also in the Local Table, the method proceeds to step 555; otherwise, the method proceeds back to step 510.

In step 550, method 500 adds the received source IP address cumulative count into the existing source IP address entry, and updates the timestamp in the Global Table. In step 555, method 500 adds the source IP address cumulative count of the Local Table into this new source IP address entry in the Global Table. In step 560, method 500 sends the source IP address cumulative count in the Local Table to other worm probes. In step 565, method 500 checks if the source IP address cumulative count exceeds the predefined global threshold. If the predefined global threshold is not exceeded, the method 500 proceeds back to step 510. If it is exceeded, method 500 proceeds to step 570. Step 570 identifies and blocks worm source IP address by using method 200 steps 260, 265, 270, 275, 280, 285 and 287. Then, method 500 proceeds back to step 510.

The architecture of the present invention may comprise the following components:
- The worm probe devices can be any general purpose computer systems with the equivalent processing power of an Intel based Pentium IV 3.0 GHz CPU with at least 1 GB RAM and a gigabit Ethernet NIC running LINUX OS with the Sniffer application capability. A Sniffer application is a program and/or device that monitors all data packets traveling over a network segment which the computer NIC card is plugged in. All worm probe devices must be configured to run NTP (Network Time Protocol) peer services to synchronize the time to UTC (Universal Time Clock). The worm probe application can be in the form of, but is not limited to, a C language executable application.
- The worm probe devices are deployed in the internal networks of an entity, e.g., a company, such as a LAN or main traffic aggregation hubs or exchange points with heavy IP traffic load in the network, such as border router, firewall, proxy, VPN concentrator, IDS and IPS segments. Every segregated network can have at least one probe device deployed at IP node with heavy traffic. A big global network will have about a dozen of worm probes deployed within the network.
- Routers deployed within the company internal networks should be compliant to Internet Engineering Task Force (IETF) Request For Comments (RFC) 792 or routing based on IANA reserved IP addresses or both.
- The worm probes use the TACACS+ method to communicate with routers and switches to block infected computer systems. TACACS+ is a security application that provides centralized validation of users attempting to gain access to a router or network access server.

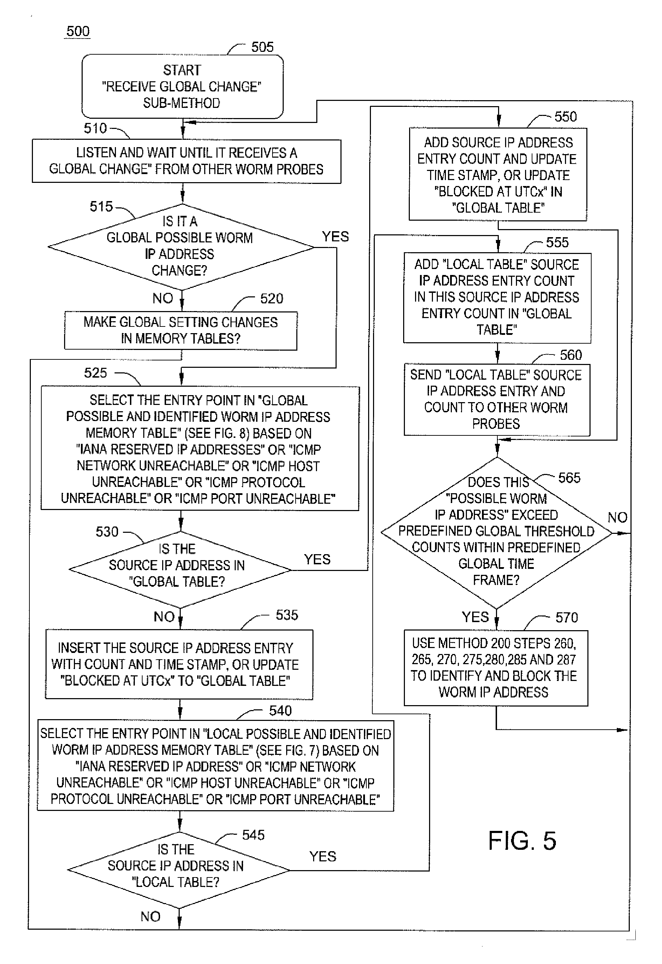

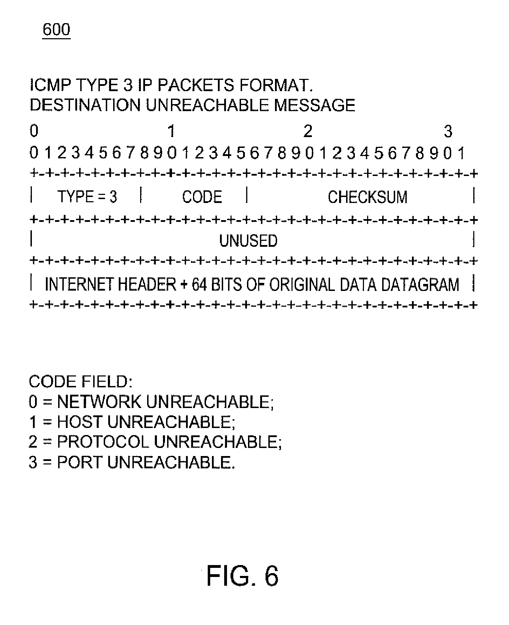

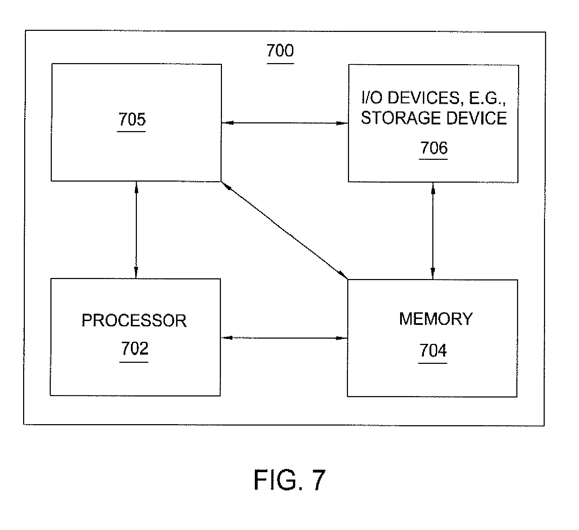

FIG. 7 depicts a high level components diagram of a general purpose computer suitable for use in performing the functions described herein. As depicted in FIG. 7, the system 700 comprises a processor element 702 (e.g., a CPU), a memory 704, e.g., random access memory (RAM) and/or read only memory (ROM), an identifying and disabling TCP/IP worm module 705, and various input/output devices 706 (e.g., storage devices, including but not limited to, a tape drive, a floppy drive, a hard disk drive or a compact disk drive, a receiver, a transmitter, a speaker, a display, a speech synthesizer, an output port, and a user input device (such as a keyboard, a keypad, a mouse, and the like)).

It should be noted that the present invention can be implemented in software and/or in a combination of software and hardware, e.g., using application specific integrated circuits (ASIC), a general purpose computer or any other hardware equivalents. In one embodiment, the present identifying and disabling TCP/IP worm module or process 705 can be loaded into memory 704 and executed by processor 702 to implement the functions as discussed above. As such, the present identifying and disabling TCP/IP worm process 705 (including associated data structures) of the present invention can be stored on a computer readable medium or carrier, e.g., RAM memory, magnetic or optical drive or diskette and the like.

While various embodiments have been described above, it should be understood that they have been presented by way of example only, and not limitation. Thus, the breadth and scope of a preferred embodiment should not be limited by any of the above-described exemplary embodiments, but should be defined only in accordance with the following claims and their equivalents.

## Claims

1. A method for detecting a potential worm infection in a communication network, comprising:
counting packets traversing said communication network with unreachable destinations on a per source address basis; and
detecting said potential worm infection if a count of said packets has exceeded a predefined threshold for said source address within a predefined time period.

2. The method of claim 1, further comprising:
deploying a plurality of worm probes throughout said communication network, where each of said plurality of worm probes performs said packet counting at a local location of said communication network.

3. The method of claim 2, further comprising:
sending said source address and an associated local count from one of said plurality of worm probes to the rest of said plurality of worm probes in said communication network if said local count has exceeded a predefined local threshold for said source address.

4. The method of claim 3, further comprising:
blocking traffics from an endpoint device with said source address if a global count has exceeded a predefined global count threshold for said source address.

5. The method of claim 4, wherein said global count is a sum of a plurality of said local counts from one or more of said plurality of worm probes.

6. The method of claim 4, wherein said blocking comprises:
identify a router or a switch closest to said endpoint device with said source address; and
sending a command to said router or said switch to block traffic originating from said endpoint device with said source address.

7. The method of claim 4, further comprising:
sending an alarm to a network administrator if said global count threshold has been exceeded by said endpoint device with said source address.

8. The method of claim 1, wherein said communication network is a packet network.

9. The method of claim 8, wherein said packet network is an Internet Protocol (IP) network.

10. The method of claim 2, wherein said plurality of worm probes are deployed at locations, comprising at least one of: a Local Area Network (LAN) Internet Protocol (IP) subnet in said communication network and a traffic hub in said communication network.

11. The method of claim 1, wherein said packets are Internet Control Message Protocol (ICMP) type 3 packets.

12. The method of claim 1, wherein said packets are packets that contain information relating to at least one of: a network unreachable error, a host unreachable error, a protocol unreachable error, a port unreachable error, and an IP packet with destination address in IANA reserved address space.

13. The method of claim 1, wherein said predefined threshold is determined in accordance with at least one of: a parameter X and a parameter Y, where X = (UN) - 1 and Y = (L-M)/N, where L is a total number of IP addresses available in said communication network, where M is a total number of IP addresses with live systems in said communication network, and where N is a total number of IP addresses within said communication network that are capable of being penetrated by a worm.

14. A computer-readable medium having stored thereon a plurality of instructions, the plurality of instructions including instructions which, when executed by a processor, cause the processor to perform the steps of a method for detecting a potential worm infection in a communication network, comprising:
counting packets traversing said communication network with unreachable destinations on a per source address basis; and
detecting said potential worm infection if a count of said packets has exceeded a predefined threshold for said source address within a predefined time period.

15. The computer-readable medium of claim 14, further comprising:
deploying a plurality of worm probes throughout said communication network, where each of said plurality of worm probes performs said packet counting at a local location of said communication network.

16. The computer-readable medium of claim 15, further comprising:
sending said source address and an associated local count from one of said plurality of worm probes to the rest of said plurality of worm probes in said communication network if said local count has exceeded a predefined local threshold for said source address.

17. The computer-readable medium of claim 16, further comprising:
blocking traffics from an endpoint device with said source address if a global count has exceeded a predefined global count threshold for said source address.

18. The computer-readable medium of claim 17, wherein said global count is a sum of a plurality of said local counts from one or more of said plurality of worm probes.

19. The computer-readable medium of claim 17, wherein said blocking comprises:
identify a router or a switch closest to said endpoint device with said source address; and
sending a command to said router or said switch to block traffic originating from said endpoint device with said source address.

20. An apparatus for detecting a potential worm infection in a communication network, comprising:
means for counting packets traversing said communication network with unreachable destinations on a per source address basis; and
means for detecting said potential worm infection if a count of said packets has exceeded a predefined threshold for said source address within a predefined time period.
